# EUROPÄISCHE PATENTSCHRIFT

(11) **EP 0 382 682 B1**
(45) Veröffentlichungstag und Bekanntmachung des Hinweises auf die Patenterteilung: **26.10.1994**
(21) Anmeldenummer: 90810090.2
(22) Anmeldetag: 08.02.1990
(51) Int. Cl.: G02F 1/025, G02F 1/225, G02B 6/12

(54) **Integrierte optische Schaltung**
Integrated optical circuit
Circuit optique intégré

(30) Priorität: 08.02.1989 CH 421/89
(43) Veröffentlichungstag der Anmeldung: 16.08.1990
(73) Patentinhaber: Reinhart, Franz-Karl, Prof.Dr., 1005 Lausanne (CH)
(72) Erfinder: Reinhart, Franz-Karl, Prof. Dr., CH-1005 Lausanne (CH); Faist, Jérôme, CH-1004 Lausanne (CH); Wüthrich, Christian, CH-1024 Ecublens (CH)
(74) Vertreter: Keller, René, Dr.

(56) Entgegenhaltungen:
- WO-A-86/03306
- WO-A-88/03278
- DE-A- 3 724 634
- US-A- 4 291 939
- OPTICAL AND QUANTUM ELECTRONICS, Band 17, Nr. 6, November 1985, Chapman and Hall ; O. MIKAMI et al. : "In GaAsP/InP optical waveguide switch operated by a carrier-induced change in the refractive index", Seiten 449-455.
- IEEE JOURNAL OF QUANTUM ELECTRONICS, Band QE-23, Nr. 12, Dezember 1987 ; R. CHEN et al. : "GaAs-GaA1As Heterostructure Single-Mode Channel-Waveguide Cutoff Modulator and Modulator Array", Seiten 2205-2209.

## Beschreibung

Die Erfindung betrifft eine integrierte optische Schaltung gemäß dem Oberbegriff des Patentanspruchs 1 und ein Verfahren zum Betrieb der integrierten optischen Schaltung gemäß dem Oberbegriff des Patentanspruchs 12.

Optische Schaltungen dieser Art werden bei optischen Nachrichtenübertragungssystemen (für Telephonie, TV, Computerdaten, ...), insbesondere als integrierte optische Schalter und Modulatoren eingesetzt. Da eine vorgegebene Polarisation einer ausgesandten Welle bei ihrer Signalausbreitung über größere Entfernungen auch in Monomode-Lichtleitern verloren geht, sind zum Schalten polarisationsunabhängige Schalter bzw. Modulatoren erforderlich.

Ein derartiger optischer Schalter/Modulator ist in der US-PS-4,291,939 beschrieben. Seine Wellenleiter sind auf einem elektrooptischen Kristall angeordnet oder in ihn eingebettet. Der Schalter besitzt zwei Eingangs- und Ausgangswellenleiter, die entlang eines Richtkopplers mit geringem gegenseitigen Abstand parallel zueinander verlaufen.

Die Koppelstrecke ist in vier Gebiete entlang ihres Wellenleiterverlaufs unterteilt. Im ersten und vierten Gebiet liegt je eine zu den Wellenleitern parallel verlaufende Elektrode außerhalb der angenäherten Wellenleiter und eine zwischen ihnen. Diese Elektrodenanordnung wurde gewählt, um einen elektrischen Feldlinienverlauf parallel zur Oberfläche des Kristalls und orthogonal zur Richtung der Wellenleiter zu erzeugen. Im zweiten und dritten Gebiet liegt je eine zu den Wellenleitern parallel verlaufende Elektrode direkt über dem Wellenleiter. Hierdurch soll ein elektrischer Feldlinienverlauf erreicht werden, der im allgemeinen orthogonal zur Kristalloberfläche und orthogonal zur Richtung der Wellenleiter verläuft. Die relativen Elektrodenpotentiale des ersten und vierten Gebiets sind zueinander entgegengesetzt, ebenso die relativen Elektrodenpotentiale an den Elektroden des zweiten und dritten Gebiets. Falls nötig können weitere Gebiete mit Elektroden hinzugefügt werden. Die in einem Eingangswellenleiter zugeführte Welle wird je nach den angelegten Spannungen entweder zu dem einen oder dem anderen Ausgangswellenleiter geleitet. Als Variante wird obiger Schalter in der US-PS-4,291,939 als Mach-Zehnder-Interferometer ausgebildet.

Das Bauelement benötigt eine verhältnismäßig große Baulänge mit mehreren elektrische Anschlüssen und unterschiedlichen Spannungen, weil die durch elektrische Spannungsänderungen erzeugten Suszeptibilitätsänderungen relativ klein sind.

Wie in der US-PS-4,291,939 beschrieben, läßt sich ein Mach-Zehnder-Interferometer bzw. ein Richtkoppler auf einem Lithiumniobatkristall (LiNbO₃) herstellen. Die zusätzlich erwähnten Halbleiterkristalle der chemischen Gruppe III-IV, wie GaAs und der Gruppe II-VI, wie CdSe waren jedoch, wie Versuche ergaben, nicht geeignet.

Aufgabe der Erfindung ist es, in einer integrierten optischen Schaltung ein raumsparendes Schaltungselement zur Führung von optischen Wellen zu schaffen, das es ermöglicht, mit einer einzigen, niedrigen an das Schaltungselement angelegten Spannung eine Veränderung der Phasengeschwindigkeit der Wellen zu erzeugen, derart, daß das Schaltungselement in einem optischen Schalter, einer Weiche, einem Intensitätsmodulator oder einem Polarisationsseparator einer integrierten optischen Schaltung einsetzbar ist.

Die erfindungsgemäße Lösung dieser Aufgabe ist hinsichtlich der Schaltung durch die im Patentanspruch 1 und hinsichtlich des Betriebs der Schaltung durch die im Patentanspruch 12 angegebenen Merkmale gekennzeichnet. Gegenstand der Ansprüche 2 bis 11 sind bevorzugte Ausführungsformen der erfindungsgemäßen Schaltung.

Der durch die Erfindung erzielte Vorteil ist im wesentlichen darin zu sehen, daß ein raumsparend aufgebautes optisches Schaltungselement durch elektrische Schaltspannungen in definierte optische Schaltzustände derart versetzbar ist, daß ein einwandfreies Schalten einer optischen Welle unabhängig von ihrer Polarisation möglich ist. Dies wird durch eine bestimmte Elektrodenkonfiguration erreicht, wobei die erzeugbare optische Suszeptibilitätsänderungen durch den linearen, quadratischen elektrooptischen Effekt und durch die Konzentrationsänderungen der freien Ladungsträger ausgenützt werden. Dadurch erreichen wir ein raumsparendes Schaltungselement, welches mit niedrigen elektrischen Schaltspannungen definierte Schaltzustände besitzt.

Vorteilhaft wird ein Halbleiterkristall der Punktgruppensymmetrie 43m verwendet, dessen 110 - Achsen parallel zur Länge der Elektroden und des Wellenleiterteils, in dem eine Phasenverschiebung der sich ausbreitenden Welle erzeugt wird, liegen. Der lineare elektrooptische Effekt des Halbleitermaterials vergrößert oder verkleinert den Brechungsindex des Wellenleiterteils mit steigender elektrischer Feldstärke zwischen den Elektroden, je nachdem wie die Achsen des Kristall zu den elektrischen Feldlinien des angelegten elektrischen Feldes stehen. Der quadratische elektrooptische Effekt und die Beiträge der freien Ladungsträgerdichte erhöhen mit sich vergrößernder elektrischer Feldstärke den Brechungsindex. Eine Vergrößerung des Brechungsindexes zieht eine Vergrößerung der Phasenverschiebung der in dem Wellenleiterteil geführten Welle nach sich.

Vorteilhaft ist die Breite einer auf einem rippenartigen Vorsprung des Wellenleiterteils des Halbleiterbauelements liegenden Elektrode kleiner als die Breite des Vorsprungs bei einem Kristall, dessen kristallographische (001)-Ebene parallel zur Richtung des Wellenleiters im Halbleiterelement liegt. Hierdurch werden die elektrischen Feldlinien des elektrischen Feldes zwischen der Elektrode und einer Elektrodenplatte auf der anderen Seite des Halbleiterelements stark verkrümmt, was eine Verringerung der durch den linearen elektrooptischen Effekt hervorgerufenen absoluten Phasenverschiebung der TE-Welle und eine relative Vergrößerung derjenigen der TM-Welle bewirkt. Je nach Wahl der freien Ladungsträgerdichte und des Verhältnisses von Elektrodenbreite über dem Wellenleiterteil zu dessen Breite läßt sich entweder eine gleiche absolute Phasenverschiebung für TE- und TM-Welle über einen elektrischen Spannungsbereich erzielen, oder ein Spannungswert einstellen, bei dem die Phasenverschiebung sowohl für eine TE- als auch für eine TM-Welle gleich einer halben Wellenlänge oder einem ungeradzahligen Vielfachen davon ist.

Vorteilhaft läßt sich das Halbleiterbauelement in den einen Zweig eines Mach-Zehnder-Interferometers integrieren. Die durch die Spannung zwischen der Elektrode auf dem rippenartigen Vorsprung des Wellenleiterteils und der Elektrodenplatte im Wellenleiter erzeugte Änderung der Phasengeschwindigkeit bewirkt gegenüber der im nicht beeinflußten Wellenleiterzweig geführten Welle eine Phasenverschiebung. Durch die Überlagerung der optischen Felder der in den beiden Zweigen fließenden Wellen am Ausgang des Interferometers ergeben sich Werte der Intensität der überlagerten Wellen je nach deren relativen Phasenverzögerung, die zwischen einer maximalen Intensität und vollständiger Auslöschung liegen. Dadurch läßt sich ein derartiges Mach-Zehnder-Interferometer als Schalter einsetzen. Bei einer Differenz der absoluten Phasenverschiebung von einer halben Wellenlänge zwischen der TE-und TM-Welle in den beiden Zweigen gegeneinander, ergibt sich ein Polarisationsseparator und bei einer gleichen oder ungeradzahligen absoluten Phasenverschiebungen von TE- und TM-Welle, wobei die phasenverschiebende elektrische Spannung im Takte eines Signals verändert wird, ein Schalter oder Intensitätsmodulator. Je nach gewählter Vorspannung (Arbeitspunkt), um die sich ein Spannungshub ändert, ist der Intensitätsverlauf mehr oder weniger linear zur modulierenden Spannung. Die Nichtlinearität und die Wahl eines Arbeitspunktes kann zur Feineinstellung der ganzzahligen Phasenverschiebung benützt werden.

Als weiterer Vorteil läßt sich in einer Variante der Raumbedarf des Mach-Zehnder-Interferometers verringern, indem in beiden Wellenleiterzweigen je ein Halbleiterbauelement integriert ist. Die Elektroden auf dem rippenartigen Vorsprung des jeweiligen Wellenleiters lokalisiern das elektrische Feld auf die respektiven Wellenleiterzweige. Schaltspannungen können entgegengesetzt überlagert werden (push-pull), womit ein Schalten mit geringerem Spannungshub und geringerer Leistung möglich ist.

Vorzugsweise werden in einer weiteren Variante die Zuführleitungen zu den Elektroden und deren Anschlußfelder mit einer deren gegenseitigen Abstand vergrössernden nichtleitenden Oxydschicht unterlegt, damit sich die Kapazität der gesamten Elektrodenanordnung verringert und dadurch reduzierte Schaltleistungen und damit Schaltzeiten erreichbar sind.

Hat vorzugsweise das Mach-Zehnder-Interferometer an seinen Verzweigungsorten je einen Koppler, bei dem je zwei Leitungen entlang einer Koppellänge nebeneinander verlaufen, und ist ebenfalls in beiden Leiterzweigen je ein Halbleiterbauelement integriert, so kann diese Schaltung zusätzlich als einstellbare Weiche zwischen den beiden Leitern verwendet werden. Dadurch läßt sich die Wirksamkeit der Schaltfunktion des Schalters kontrollieren.

Im folgenden werden Ausführungsbeispiele der erfindungsgemäßen integrierten optischen Schaltung anhand der Zeichnungen näher erläutert. Es zeigen:
- Fig. 1: eine Draufsicht auf ein Halbleiterbauelement in schematischer Darstellung,
- Fig. 2: einen teilweisen Querschnitt durch das Halbleiterbauelement in schematischer Darstellung entlang der Linie II - II in **Figur 1**,
- Fig. 3: ein Diagramm der Phasenverschiebung einer TM-, und je einer TE-Welle, die sich entlang der [110]-bzw. der [110]-Kristallachse ausbreiten in Abhängigkeit von einer angelegten elektrischen Spannung zwischen den Elektroden des Halbleiterbauelements in **Figur 2**,
- Fig. 4: eine Draufsicht auf ein Mach-Zehnder-Interferometer mit einem Schaltungselement in einem der Wellenleiterzweige,
- Fig. 5: eine Draufsicht auf ein Mach-Zehnder-Interferometer mit je einem Halbleiterbauelement in jedem der Wellenleiterzweige und je einem Eingangs- und Ausgangskoppler, und
- Fig. 6: Schnitt durch einen Koppler und zwei Halbleiterbauelemente entlang den Linien VI₁ - VI₁ und VI₂ - VI₂ in **Figur 5**.

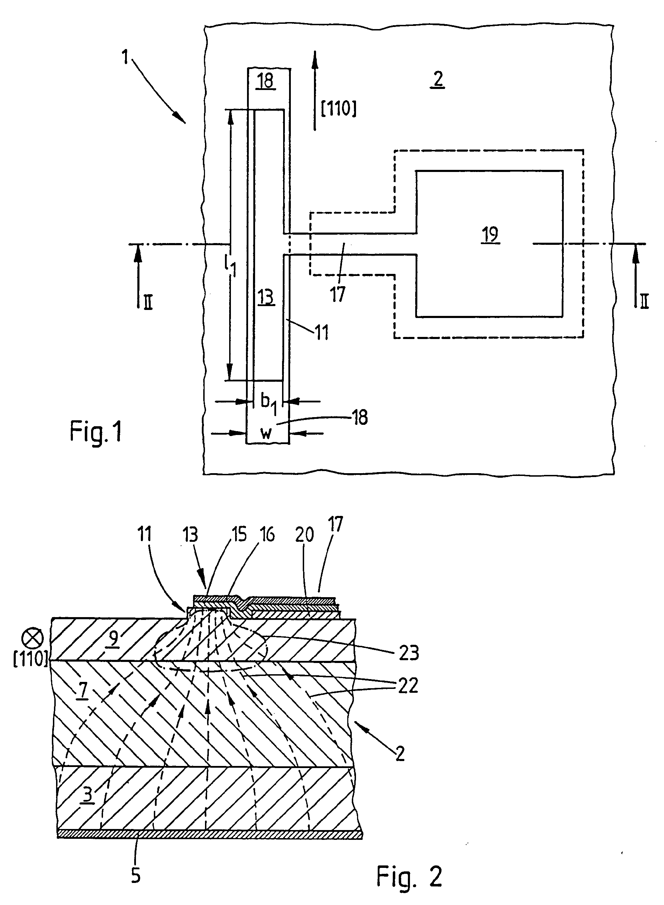

Das in den **Figuren 1 und 2** dargestellte Halbleiterbauelement **1** besitzt eine GaAs-GaₓAl₁₋ₓAs-Heterostruktur **2**, dessen Ebene mit der kristallographischen (001) Ebene zusammenfällt. Die Heterostruktur **2** hat ein Si-dotiertes n-GaAs-Substrat **3** (Dotierung ≧ 10¹⁸ cm⁻³), auf dessen Grundfläche eine Elektrode **5** aus AuGe/Ni/Au aufgedampft ist. An der anderen Seite des Substrats **3** liegt eine ebenfalls Si-dotierte Schicht **7** aus n-Ga_{0,9}Al_{0,1}As (Dotierung 2·10¹⁷ cm⁻³), die mit einer schwach bis undotierten Schicht **9** aus GaAs (Dotierung ≦ 3·10¹⁶ cm⁻³) bedeckt ist. Die Schicht **9** hat eine beidseits stufenförmige Rippe **11** zur Führung einer TE- und TM-Welle (Wellenlänge etwa 1,15 µm) in den Schichten **7** und **9**. Die Rippe **11** ist über eine Länge **l₁** von etwa vier Millimetern mit einer Elektrode **13** bedeckt, wobei die Rippenachse parallel zur kristallografischen [110]-Achse verläuft. Unmittelbar über der Rippe **11** hat die Elektrode 13 eine elektrisch leitende und optisch nicht allzu stark absorbierende Schicht **15**, z. B. eine Indiumzinnoxydschicht. Die Trennfläche zwischen der Oxydschicht **15** und der Deckfläche der Rippe **11** wird als Schottky-Barriere bezeichnet. Über der Oxydschicht **15** liegt eine elektrisch gut leitende Goldschicht **16**. Indiumzinnoxyd ist ein elektrischer Leiter, allerdings mit einer Leitfähigkeit, die ungefähr fünfhundertmal schlechter als die von Kupfer ist, und ein optisch transparentes Medium mit einer optischen Absorption, wobei der Absorptionskoeffizient < 1000 cm⁻¹ ist. Die mittels der Rippe **11** geführte optische Welle dringt geringfügig in die Indiumzinnoxydschicht **15** ein. Wäre die gut leitende Goldschicht **16** direkt auf der Deckfläche der Rippe **11**, würde die optische TM-Welle stark gedämpft. Die Elektrode **13** liegt mit einer Breite **b₁**, die etwa zwanzig Prozent schmaler als die Rippenbreite **w** ist (etwa 3 µm), und somit die Rippe **11** nicht vollständig bedeckt, symmetrisch zu deren Mitte. Die Rippe **11** geht als Teil eines Wellenleiters **18** mit gleicher Rippenhöhe und Breite in diesen vor und hinter der teilweisen Bedeckung durch die Elektrode **13** über. Die in der Rippe **11** geführte Welle wird nach oben durch die Indiumoxydschicht **15** und nach unten durch die Trennschicht zwischen Schicht **9** und der Schicht **7** begrenzt, wobei die Welle noch geringfügig im an die Trennschicht angrenzenden Teil der Schicht **7** parallel zur Trennschicht in Ausbreitungsrichtung verläuft und die im Wellenleiter **18** geführte Welle nach oben durch die Oberfläche des Wellenleiters **18** und nach unten ebenfalls durch die Trennfläche begrenzt wird. Die Trennschicht zwischen den Schichten **7** und **9** stellt keine scharfe Trennebene für die optischen Welle dar.

Die Elektrode **13** ist mit einem zu ihr annähernd senkrecht verlaufenden Leitungsstück **17** mit einem Anschlußfeld **19** auf der Oberfläche der Heterostruktur **2** verbunden. Das Anschlußfeld **19** und das Leitungsstück **17** bestehen ebenfalls aus einer Indiumzinnoxyd- und einer Goldschicht **15** und **16**. Die Länge des Leitungsstückes **17** ist so kurz gewählt, daß nur eine geringe Induktivität für den vom Anschlußfeld **19** zur Elektrode **13** fließenden Schaltstrom vorhanden ist, aber so lang, daß mechanische Spannungen, welche durch das Bonden von Anschlußdrähten auf dem Anschlußfeld **19** entstehen könnten, sich nicht bis zum Wellenleiter **18** fortpflanzen. Der Indiumzinnoxydschicht **15** ist bis nahe an den Rippe **11** heran eine isolierende Oxydschicht **20** unterlegt.

Das Anschlußfeld **19** dient zum Anschluß an eine nicht dargestellte elektrische Spannungsquelle. Um eine schnelle Anstiegszeit einer Schalt- oder Modulationsspannung zwischen den Elektroden **5** und **13** zu erreichen, ist die zwischen dem Leitungsstück **17**, dem Anschlußfeld **19** und der Elektrode **5** liegende Kapazität klein gehalten, indem deren gegenseitiger Abstand durch die isolierende Oxydschicht **20** erhöht ist.

Der Feldlinienverlauf der elektrischen Feldstärke zwischen den Elektroden **5** und **13** ist in **Figur 2** als gestrichelte Linien **22** und die Ausdehnung des optischen elektromagnetischen Feldes einer TE- bzw. einer TM-Welle bis zu ihrem 1/e-Abfall als strichpunktierte Linie **23** dargestellt. Die Dichte der Feldlinien **22** im Bereich der Rippe **11**, welche die TE/TM-Welle in den Schichten **7** und **9** führt, läßt sich durch die Breite **b₁** der Elektrode **13** beeinflussen; je kleiner die Breite **b₁** der Elektrode **13** eine desto stärkere Feldlinienverkrümmung innerhalb der geführten TE- und TM-Wellen wird erreicht. Die zu den Elektrodenoberflächen nicht senkrecht verlaufenden Feldkomponenten innerhalb des Feldes **23** beeinflussen die Phasengeschwindigkeit der Moden der optischen Wellen nur über den quadratischen elektrooptischen Effekt und die Ladungsträgereffekte. Der dominante Beitrag des linearen elektrooptischen Effekts für die Phasengeschwindigkeitsvariation der TE-Welle wird aber durch die starke Feldverkrümmung reduziert. Dadurch können die relativen Phasenverschiebungen zwischen der TE- und der TM-Welle gegeneinander abgestimmt werden. Das optimale Verhältnis der Elektrodenbreite **b₁** zur Rippenbreite **w** des Wellenleiters hängt von der genauen Dimensionierung der Materialien (Dotierung, Aluminiumkonzentration **x**, Dicke der Schicht **9**, der Wellenlänge der geführten Welle und der Rippenbreite **w**) ab und kann mit bekannten Modellrechnungen [siehe J. Faist, F. K. Reinhart, D. Martin and E. Tuncel, "Orientation dependence of the phase modulation in a p-n junction GaAs/AlₓGas₁₋ₓAs waveguide", Appl.Phys.Lett.50 (2), 69 (1987)] genau bestimmt werden. Für das beschriebene Beispiel ist **b₁/w** etwa 0,8 bei einer Breite w des Wellenleiters von etwa 3 µm.

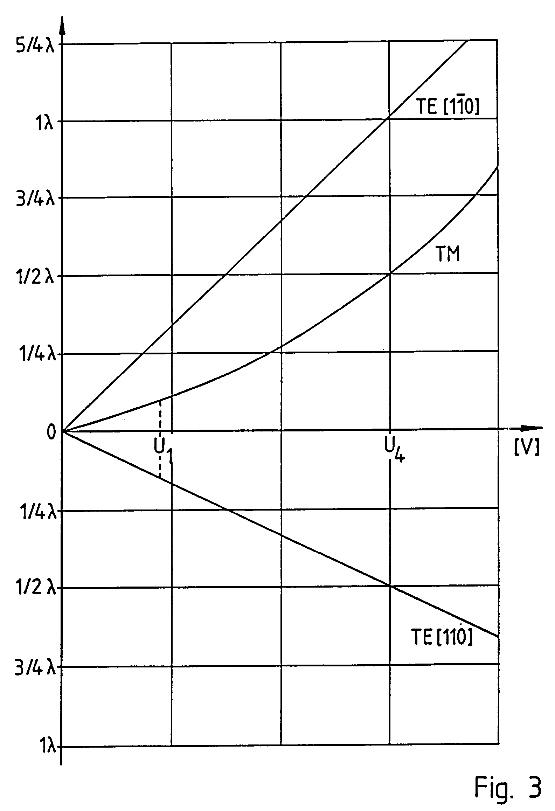

Der im Diagramm in **Figur 3** dargestellte Verlauf der Phasenverschiebung in Abhängigkeit der Spannung zwischen den Elektroden **5** und **13** der TM-Welle ist mit TM, derjenige der TE-Welle ist mit TE bezeichnet. Die Bezeichnung der Phasenverschiebung der TE-Welle des Ausführungsbeispiels trägt den Zusatz [110]. Hierdurch wird ausgedrückt, daß, wie oben dargelegt, die [110]-Achse der Heterostruktur **2** parallel zum Verlauf des mit der Elektrode **13** belegten Teils der Rippe **11** und in Wellenausbreitungsrichtung verläuft. Die mit TE [110] bezeichnete Kurve bezieht sich analog auf die Phasenverschiebung einer TE-Welle in einer Heterostruktur **2**, deren [110]-Achse parallel zu dem mit der Elektrode **13** belegten Teil der Rippe **11** und in Wellenausbreitungsrichtung verläuft; auf die Anwendung dieser Kurve wird unten in den Ausführungsvarianten eingegangen. Die Phasenverschiebung der TM-Welle ist unabhängig von der Lage der Kristallachsen. In der weiteren folgenden Darstellung wird unter TE-Welle, sofern nichts anderes erwähnt ist, die in **Figur 3** mit TE [110] bezeichnete Welle verstanden.

Eine Phasenverschiebung ergibt sich durch eine Verringerung oder Erhöhung der Phasengeschwindigkeit in der Rippe **11**, die durch eine Erhöhung oder Erniedrigung ihres Brechungsindexes in der Rippe **11** mit steigender elektrischer Feldstärke erreicht wird. Eine Erhöhung bzw. Erniedrigung des Brechungsindexes erfolgt durch den linearen elektrooptischen (Pockels-) Effekt mittels erhöhtem, angelegtem elektrischen Feld, wohingegen nur eine Erhöhung mittels des quadratischen (Kerr-) elektrooptischen Effekts und der freien Ladungsträger erreichbar ist.

In **Figur 3** nimmt mit steigender Spannung **U** der Brechungsindex der Rippe **11** im Bereich der Elektrode **13** für die TM-Welle zu und für die TE-Welle [110] ab. Hieraus folgt für die TM-Welle eine Verkleinerung der Phasengeschwindigkeit, die in der Ordinate als Anzahl verschobener Wellenlängen (Lambda) angegeben ist (positive Lambda-Werte) und für die TE-Welle eine Verringerung (negative Lambda-Werte). In diesem Fall wirkt das Halbleiterbauelement 1 als Phasenmodulator; eine Intensitätsmodulation tritt nicht auf, jedoch kann der Polarisationszustand einer aus einer TE- und TM-Komponente bestehenden Welle insofern verändert werden, als die Komponenten in ihrer Phase gegeneinander verschoben werden können.

Beträgt die Phasenverschiebung zwischen TE- und TM-Welle eine viertel Wellenlänge, wie in **Figur 3** bei der Spannung **U₁**, so tritt z. B. eine mit gleichen TE- und TM-Wellenamplituden in das Halbleiterbauelement **1** eintretende linearpolarisierte optische Welle nach Durchlaufen desselben als zirkularpolarisierte Welle aus; eine zirkularpolarisierte Welle würde in eine linearpolarisierte umgeformt werden.

Eine erhöhte freie Ladungsträgerdichte, hervorgerufen durch eine stärkere Dotierung, verringert die Steigung der Kurve der Phasenverschiebung der TE-Welle bei einer [110]-Kristallorientierung; diejenige der TM-Welle und der TE-Welle erhöht sich bei einer [110]-Kristallorientierung. Eine Verringerung der Breite **b₁** der Elektrode **13** reduziert den absoluten Wert der Phasenverschiebung, hervorgerufen durch den linearen elektrooptischen Effekt. Der Herstellungsprozeß läßt sich derart steuern, daß die Kennlinien in **Figur 3** für die TE-Welle [110] und die TM-Welle bereichsweise gleichen positiven, bzw. negativen Verlauf der Phasenverschiebung haben oder eine gewünschte Phasenverschiebung zwischen TE- und TM-Welle erhalten wird. Ein weiterer Freiheitsgrad ergibt sich durch die Orientierung der Kristallachsen zum elektrischen Feld und zur Ausbreitungsrichtung der Welle.

Die im Diagramm in **Figur 3** dargestellten Kurven wurden bei einer Dotierung von 10¹⁵ cm⁻³, einer Schichtdicke des GaAs-Substrats 3 von 450 µm, der n-GaAlAs-Schicht von 25 µm, der GaAs-Schicht 6 von 1,1 µm, einer Höhe **h**_{**k**} der Rippe **11** von 650 Å, einer Wellenleiterbreite **w** von 25 µm, einer Breite **b₁** der Elektrode **13** von 3 µm, und einer Länge **l₁** der Elektrode von 4 mm erhalten, wobei ein Rasterelement der Abszisse ungefähr 6 V entspricht.

Als Halbleitermaterial **2** können elektrooptische Materialien aus den chemischen Gruppen **III** und **V**, wie z. B. GaAs, Al_{y}Ga_{1-y}As, InP, InGaAsP, InAlGaAs, sowie aus den Gruppen **II** und **VI**, wie z. B. CdTe verwendet werden. Anstelle eines GaAs-Substrates 3 kann auch ein InP-Substrat verwendet werden. Ebenfalls kann die Schicht **7** aus Ga_{0,9}Al_{0,1}As durch AlₓGa₁₋ₓAs oder Ga₁₋ₓInAs_{1-y}P_{y}, sowie die aus GaAs bestehende Schicht **9** durch Ga_{1-x'}Al_{x'}As oder Ga_{1-x'}In_{x'}As_{1-y} oder Ga_{1-x-y}InₓAl_{y}As ersetzt werden, wobei x > x' ist. Der optische Brechungsindex der Schicht **7** ist immer kleiner als der der Schicht **9**.

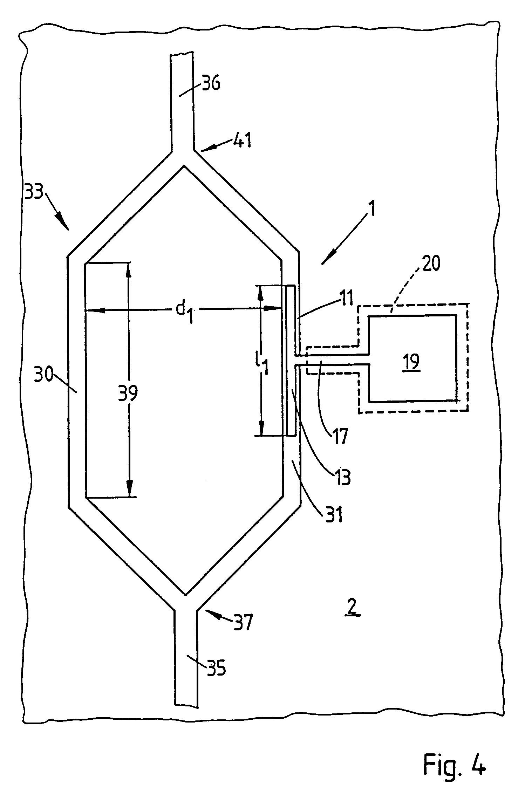

Das Schaltungselement **1** kann in einen der beiden Zweige **30** und **31** z. B. in den rechten Zweig **31**, wie in **Figur 4** dargestellt, eines Mach-Zehnder-Interferometers **33** integriert werden, wobei das gesamte Interferometer **33** in einem Herstellungsprozeß, wie er unten beschrieben ist, hergestellt wird. Das Mach-Zehnder-Interferometer **33** hat einen Eingangs und einen Ausgangswellenleiter **35** und **36**. Der Eingangswellenleiter **35** verzweigt sich an einem Ort **37** in die beiden Wellenleiterzweige **30** und **31**, die sich voneinander bis auf einen Abstand **d₁** entfernen und in einem Bereich **39** annähernd parallel zueinander verlaufen. Nach diesem Bereich **39** verringert sich der gegenseitige Abstand der beiden Wellenleiter **30** und **31** und sie vereinen sich wieder an einem Ort **41** zum Ausgangswellenleiter **36**. Die beiden Wellenleiter **30** und **31** haben gleiche optische Weglänge. Der Wellenleiter **31** geht im Halbleiterelement **1** in den Wellenleiterteil **11** mit gleicher Rippenhöhe und -breite über.

Anstelle nur eines Schaltungselementes **1** in einem oder in beiden Zweigen **30** und **31** können auch mehrere Schaltungselemente **1** mit elektrisch voneinander getrennten Elektroden **13** integriert werden. Die Vorteile eines derartigen Aufbaues sind weiter unten erläutert.

Die Intensität einer vom Wellenleiter **35** geführten TE- und TM-Welle wird am Ort **37** zu gleichen Intensitätsteilen in die beiden Wellenleiterzweige **30** und **31** aufgeteilt. Die eine Hälfte der Intensität der TE- und TM-Wellen durchläuft den Wellenleiterzweig **30** und die andere Hälfte den Wellenleiterzweig **31**. Am Ort **41** werden beide Intensitäten wieder überlagert und es ergibt sich, falls keine Spannung zwischen den Elektroden **5** und **13** liegt, wieder die ursprüngliche Intensität, wie sie im Wellenleiter **35** vorhanden war. Beträgt jedoch, wie in **Figur 3** bei dem Spannungswert **U₄** zu sehen ist, die Phasenverschiebung für die TE-Welle im Wellenleiterzweig **30** gegenüber der TE-Welle im Wellenleiterzweig **31** eine halbe Wellenlänge und die Phasenverschiebung für die TM-Welle im Wellenleiterzweig **30** gegenüber der TM-Welle im Wellenleiterzweig **31** ebenfalls eine halbe Wellenlänge, so können beide Wellen am Vereinigungspunkt **41** nicht in den Wellenleiter **36** einkoppeln, d. h. die Welle ist im Wellenleiter **36** abgeschaltet. Daß die TM-Welle eine positive Phasenverschiebung und die TE-Welle eine negative Phasenverschiebung erleidet, ist in diesem Fall bedeutungslos.

Diese Auslöschung ist allerdings nur vollständig erreichbar, wenn beide Wellen am Verzweigungsort **37** exakt in gleiche Teile aufgeteilt wurden und der Verzweigungspunkt **41** die gleichen Eigenschaften wie der Verzweigungsort **37** hat; ansonsten verbleibt eine Restintensität.

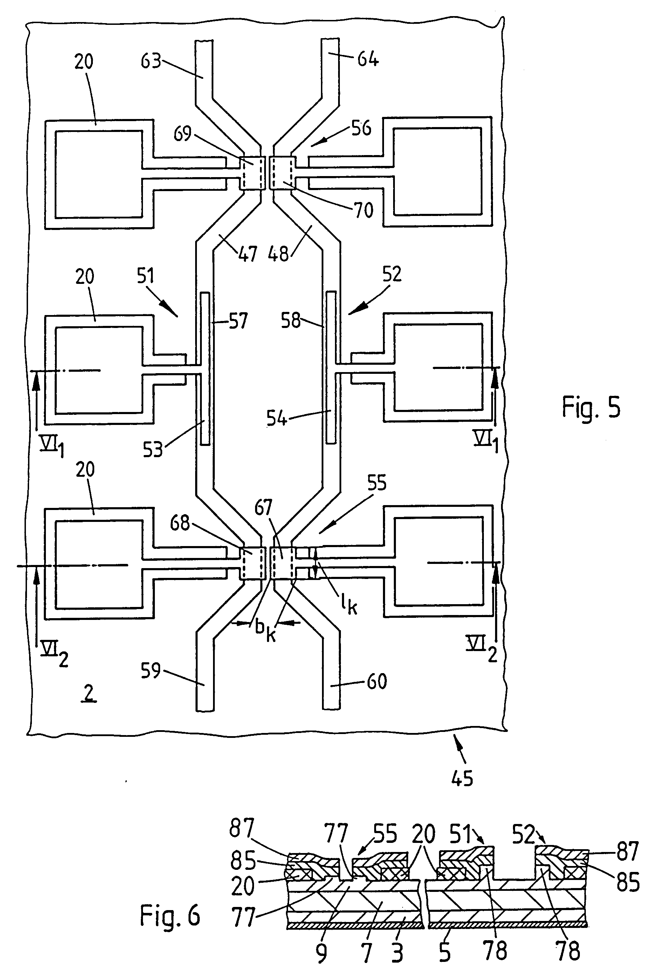

In einer Variante eines Mach-Zehnder-Interferometers **45**, wie sie in **Figur 5** dargestellt ist, sind in jedem der beiden Wellenleiterzweige **47** und **48** zum Halbleiterbauelement **1** analoge Halbleiterbauelemente **51** und **52** integriert, wobei die Anordnung einer Elektrode **53** im Halbleiterbauelement **51** spiegelbildlich zu der im Halbleiterbauelement **52** ist. Auch hier wird das gesamte Mach-Zehnder-Interferometer **45** ebenso wie das Mach-Zehnder-Interferometer **33** in einem Herstellungsprozeß erzeugt. Die Wellenleiter **47** und **48** gehen in den Halbleiterbauelementen in mit Elektroden **53** bzw. **54** bedeckte Wellenleiterteile **57** bzw. **58** mit gleicher Rippenhöhe und - breite über. Die Elektrode **54** des zweiten Halbleiterbauelements **52** ist elektrisch mit der Elektrode **5** kurzgeschlossen und schirmt dadurch den Wellenleiterzweig **48** in der Nähe des Halbleiterelements **51** gegenüber dessen Streufeld **51** ab. Aufgrund dieser Abschirmung lassen sich die beiden Wellenleiterzweige **47** und **48** in einem kleineren Abstand als diejenigen in **Figur 4** voneinander anordnen, wodurch die Breite des Mach-Zehnder-Interferometers **45** verkleinert ist.

Anstelle des Verzweigungsorts **37** und des Vereinigungsorts **41** des Mach-Zehnder-Interferometers **33** hat das Interferometer **45**, wie in **Figur 5** dargestellt, je einen 3-dB-Richtkoppler **55** und **56**. Hierdurch ergeben sich je zwei Ein- und zwei Ausgangsleitungen **59/60** und **63/64**. Durch diese Schaltung kann die Eingangswelle vom Eingangswellenleiter **59** auf den Ausgangswellenleiter **63** oder den Ausgangswellenleiter **64** oder vom Eingangswellenleiter **60** auf den Ausgangswellenleiter **63** oder **64** geschaltet werden. Ebenfalls kann eine auf einem der Eingangswellenleiter **59** oder **60** ankommende Welle mit entsprechend einer Modulationsspannung an den Kopplern **55**, **56** und den Halbleiterbauelementen **51**, **52** schwankender Intensität moduliert auf die Ausgangswellenleiter **63** und **64** verteilt werden.

Die beiden Koppler **55** und **56** sind identisch aufgebaut. Sie besitzen zwei dem Halbleiterbauelement **1** entsprechende Elemente **67** und **68**, bzw. **69** und **70**, jedoch ist deren Elektrodenlänge **l**_{**k**} und -breite **b**_{**k**}, sowie deren Höhe **h**_{**k**} der wellenführenden Rippe unterschiedlich zum Halbleiterbauelement **1**. Die Elemente **68** und **69** sind zu den Elementen **67** und **70** spiegelbildlich aufgebaut. Die Elektrodenlänge **l**_{**k**} und -breite **b**_{**k**}, die Höhe **h**_{**k**} und auch der Abstand **d**_{**k**} der beiden Leiter im Koppler **55** bzw. **56** voneinander hängt von der verwendeten Wellenlänge von etwa 1,15 µm ab. Die Höhe des rippenförmigen Vorsprungs beträgt einen Bruchteil einer Wellenlänge, die Kopplungslänge und die Elektrodenlänge **l**_{**k**} beträgt ungefähr 0,8 mm für eine Wellenlänge von 1,15 µm. Der Abstand **d**_{**k**} der beiden Wellenleiter im Kopplungsbereich beträgt etwa die Breite des Rippenwellenleiters **w** ∼ 3 µm. Die Elektrodenbreite **b**_{**k**} ist um annähernd 10% größer als die Breite des Wellenleiters. Durch diesen Aufbau ist gewährleistet, daß bei einer Spannung von < 25 V sowohl die TE-, als auch die TM-Welle zu gleichen Teilen (3 dB) von einem Leiter in den anderen gekoppelt wird. Dieser Aufbau ist gewählt worden, um Ungenauigkeiten in der gewählten Kopplungslänge ausgleichen zu können.

Ist die Differenz der Phasengeschwindigkeiten in den beiden Wellenleiterzweigen **30** und **31** bzw. **57** und **58** für die TE-Welle ein ungeradzahliges Vielfaches der Halbwellenlänge und für die TM-Welle ein ganzes Vielfaches (inklusive Null) der ganzen Wellenlänge, so wird im Mach-Zehnder-Interferometer **33** nur die TE-Welle beim Durchlaufen des Orts **41** ausgelöscht und die TM-Welle durchgelassen; analoges gilt im umgekehrten Fall. Beim Mach-Zehnder-Interferometer **45** wird in diesem Fall die TE-Welle des einen Wellenleiters im Koppler **56** in den anderen Wellenleiter eingekoppelt; d. h. eine TE-Welle im Wellenleiter **57** würde in diesem Fall in den Wellenleiter **64** übergekoppelt werden. Die TM-Welle breitet sich auf ihrem ursprünglichen Wellenleiter weiter aus; d. h. eine TM-Welle auf dem Wellenleiter **57** erscheint nach dem Koppler **56** auf dem Wellenleiter **63**. Das Mach-Zehnder-Interferometer **33** sowie **45** wirkt in diesem Fall als Polarisationsseparator.

Erleidet sowohl die TE-, als auch die TM-Welle im Wellenleiterzweig **31** bzw. **48** die gleiche absolute Phasenverschiebung, so werden beide je nach der Phasenverschiebung mehr oder weniger beim Durchlaufen des Orts **41** ausgelöscht bzw. im Fall des Kopplers **56** auf die Rippenwellenleiter **63** und **64** verteilt. Das Mach-Zehnder-Interferometer **33** bzw. **45** arbeitet in diesem Fall als Modulator.

Erfährt sowohl die TE-, als auch die TM-Welle im Wellenleiterzweig **31** des Mach-Zehnder-Interferometer **33** die gleiche absolute Phasenverschiebung, so erfolgt bei einer Phasenverschiebung einer halben Wellenlänge gegenüber der im Wellenleiterzweig **30** geführten anderen Wellen beim Durchlaufen des Orts **41** im Wellenleiter **36** Auslöschung. Erfährt sowohl die TE-, als auch die TM-Welle im Wellenleiterzweig **48** des Mach-Zehnder-Interferometer **45** die gleiche Phasenverschiebung von einer halben Wellenlänge, so tritt die im Wellenleiter **60** in das Mach-Zehnder-Interferometer **45** einfallende Welle im Wellenleiter **64** aus dem Mach-Zehnder-Interferometer **45** wieder aus und die im Wellenleiter **59** einfallende im Wellenleiter **63** wieder aus. Ist die Phasenverschiebung in den beiden Wellenleitern **47** und **48** null, so tritt die im Wellenleiter **60** einfallende Welle im Wellenleiter **63**, und die im Wellenleiter **59** einfallende im Wellenleiter **64** wieder aus. Die Mach-Zehnder-Interferometer **33** und **45** arbeiten in diesem Fall als Schalter.

Sind die Phasengeschwindigkeiten für die TE- und die TM-Welle im Wellenleiterzweig **31** unterschiedlich und bei einer bestimmten Elektrodenspannung die Phasenverschiebung der TE-Welle ein ungeradzahliges Vielfaches der halben Wellenlänge der im Wellenleiterzweig **30** geführten Welle und die Phasenverschiebung der TM-Welle ein anderes ungeradzahliges Vielfaches der halben Wellenlänge, so werden die Wellen beim Durchlaufen des Orts **41** ausgelöscht. Das Mach-Zehnder-Interferometer **33** arbeitet in diesem Fall ebenfalls als Schalter.

Die Wellenleiterzweige **30** und **31** bzw. **47** und **48** müssen nicht exakt gleiche Wege haben. Eine feste Wegdifferenz kann durch eine feste Vorspannung zwischen den Elektroden **5** und **13** bzw. **5** und **53** sowie **5** und **54** ausgeglichen werden.

Der Kurzschluß der Elektrode **54** des zweiten Halbleiterbauelements **52** mit der Elektrode **5** wird bevorzugt als Kurzschluß für hochfrequente elektrische Schwingungen durch eine Signalquelle mit kleinem Innenwiderstand ausgeführt. Wird an die Elektroden **53** und **54** eine Vorspannung gelegt, welche nur halb so groß ist, wie der zum Schalten oder Modulieren mit einem einzigen Halbleiterbauelement **51** oder **52** benötigte Spannungshub, so kann das gewünschte Schalten bzw. Modulieren mit einem nur halb so großen Spannungshub, welcher mit einer positiven Amplitude an der Elektrode **53** und mit einer negativen Amplitude an der Elektrode **54** oder umgekehrt anliegt, erreicht werden (push-pull).

Die Strukturen des Kopplers **55** - der Koppler **56** ist analog aufgebaut - und je zweier Halbleiterbauelemente **51** und **52** sind in einem Schnitt in **Figur 6** dargestellt, wobei der linke Teil der **Figur 6** den Koppler **55** und der rechte Teil die beiden Halbleiterbauelemente **51** und **52** aus **Figur 5** darstellt. Die beiden Wellenleiter des Kopplers **55** sind mit **77** und diejenigen der Halbleiterbauelemente **51** und **52** mit **78** bezeichnet. **85** ist eine Indiumoxydschicht analog zur Indiumoxydschicht **15** in **Figur 2** beim Halbleiterbauelement **1**. Eine Goldschicht **87**, analog der Goldschicht **16** in **Figur 2**, ist als leitfähiges Material für die Elektroden **57**, **58**, **67** und **68** aufgedampft.

Die Strukturen werden mit Hilfe bekannter Photolack- und/oder Elektroresisttechniken mit nass- und trocken-chemischen Verfahren hergestellt, wobei die Oxydschichten **15**, **20** und **85** vorzugsweise durch Sputtering und die Goldschicht **16** bzw. **87** durch Verdampfen aufgebracht werden. Die exakte Einhaltung der Rippenhöhe ist nur in den 3-dB Koppelelementen **55** und **56** wichtig, damit genügend kleine Koppeltoleranzen eingehalten werden. Zu diesem Zweck ist es vorteilhaft das bekannte nass-chemische Doppelanodisierungsverfahren, wie in J. C. Shelton, F.K. Reinhart, R.A.Logan, "Characteristics of rib waveguides in AlGaAs", J. Appl. Phys. 50 (11), pp. 6675 - 6687, 11. Nov. 1979 beschrieben, zu verwenden.

Wie oben bereits erwähnt, folgt auf das Substrat **3** aus Si-dotiertem GaAs die annähernd 2,5 µm dicke Schicht **7** aus Ga_{0,9}Al_{0,1}As mit einer Si-Dotierung von n = 2·10¹⁷ cm⁻³, der die annähernd 1 µm dicke Schicht **9** aus nicht dotiertem GaAs (n, p <3·10¹⁶ cm⁻³) folgt. Vorzugsweise haben die Wellenleiter **18**, **30**, **31**, **35**, **36**, **47**, **48**, **59**, **60**, **63**, und **64**, sowie die Wellenleiterteile **11**, **57** und **58** nach der Herstellung eine größere Rippenhöhe als die Wellenleiterteile unterhalb der Elektroden **67**, **68**, **69**, **70** in den Kopplern **55** und **56**, weshalb bei der Herstellung mit den Wellenleitern **18**, **30**, **31**, **35**, **36**, **47**, **48**, **59**, **60**, **63** und **64**, und den Wellenleiterteilen **11**, **57** und **58** begonnen wird. Dies ermöglicht eine effizientere Modulation und eine kleinere Gesamtlänge, um einen vorgeschriebenen Abstand zwischen den Wellenleitern **59** und **69** bzw. **63** und **64** zu erreichen, als dies bei gleichbleibender Rippenhöhe wäre.

Das Leitungsstück **17** läuft bevorzugt senkrecht zu der Elektrode **13** und zu den Elektroden der Koppler **55** und **56** weg. Dieser rechte Winkel braucht nicht eingehalten zu werden. Bei allen Auslegungen sollte nur darauf geachtet werden, daß die Leitungslängen so kurz wie möglich sind, um unnötige Kapazitäten und Induktivitäten zu vermeiden.

Anstelle die Rippenhöhe **h**_{**k**} mit unterschiedlicher Höhe für den Koppler **54** und **56**, sowie für die Wellenleiter **30**, **31**, **35**, **36**, **47**, **48**, **59**, **60**, **63** und **64** auszuführen, kann auch mit nur einer einzigen Rippenhöhe gearbeitet werden. Mit einer unterschiedlichen Rippenhöhe läßt sich jedoch einerseits die Wellenführung in den Wellenleitern **30**, **31**, **35**, **36**, **47**, **48**, **59**, **60**, **63** und **64**, sowie der Kopplungswirkungsgrad in den Kopplern **55** und **56** verbessern.

Anstelle die Deckfläche der Rippe **11** mit der Indiumzinnoxydschicht **15** zur Vermeidung einer Absorption der mittels der Rippe **11** geführten optischen Welle zu bedecken, kann die Rippenhöhe etwas größer ausgebildet werden und das der Deckfläche am nächsten liegende Gebiet p-dotiert werden und das restliche Gebiet der Rippe **11** sowie der Schicht **9** schwach n-dotiert werden. Eine gut elektrisch leitende Elektrode, z. B. eine Goldschicht, liegt direkt auf der Deckfläche der Rippe **11**. Eine zwischen der n- und p-dotierten Schicht liegende p-n-Barriere begrenzt die mittels der Rippe **11** geführte Welle in Richtung Elektrode, wobei das elektrische Feld der optischen Welle geringfügig in den p-dotierte Gebiet mit einem exponentiellen Abfall hineinragt. Eine optische Dämpfung durch die auf der Deckfläche der Rippe **11** angeordnete Elektrode kann vermieden werden, wenn eine p-dotierte Mantelschicht analog zur Schicht **7** zwischen Wellenleiter und Kontaktelektrode liegt.

Anstelle die polarisationsunabhängige Modulation oder das polarisationsunabhängige Schalten einer optischen Welle mit einem Mach-Zehnder-Interferometer **33** oder **45** vorzunehmen, kann auch ein nicht dargestellter Richtkoppler verwendet werden.

Anstelle der Elektrode **5**, welche die gesamte untere Seite des Substrats 3 bedeckt, kann auch eine schmale Elektrode mit gleicher Form und deckungsgleich zur Elektrode **13**, bzw. **53** und **54** verwendet werden. Diese Elektroden sind etwas aufwendiger in ihrer Herstellung, würden aber eine größere "Ausbeulung" der elektrischen Feldlinien in dem betreffenden Halbleiterelement ergeben. Dies würde jedoch die Schaltspannung erhöhen

Anstelle der beiden Elektroden **5** und **13** kann auch nur ein einziges Heizelement mit gleicher Lage und annähernd gleicher Größe wie die Elektrode **13** verwendet werden. Durch eine Erwärmung des unterhalb des Heizelements liegenden Wellenleiterstückes **11** wird ebenfalls die Phasengeschwindigkeit einer sich in dem Wellenleiter ausbreitenden optischen Wellen beeinflußt. Eine Beeinflußung der Phasengeschwindigkeit über einen thermischen Effekt ist allerdings langsamer als durch das oben beschriebene elektrische Feld, es können jedoch bei den oben dargelegten Abmessungen immerhin Schalt- bzw. Modulationsfrequenzen im einhundert Kilohertzbereich erzielt werden. Dies würde es auch ermöglichen isotrope Halbleiter wie Si oder Gläser als Wellenleiterelemente für polarisationsunabhängige Schaltelemente zu verwenden.

Anstelle der in den **Figuren 4** und **5** angegebenen Elektrodenanordnungen **13** sowie **53** und **54** besteht die Möglichkeit, in beiden Wellenleiterzweigen **30**, **31**, **57** und **58** des Mach-Zehnder-Interferometers **33** bzw. **45** das Schaltelement **1** bzw. **51** und **52** beliebige Male elektrisch voneinander getrennt zu wiederholen. In einer der **Figur 5** entsprechend modifizierten, nicht dargestellten Version sind in beiden Wellenleiterzweigen je vier Schaltelemente von ca 1 mm Länge angebracht. Die Distanz zwischen zwei benachbarten auf demselben Wellenleiter, analog zu den Elektroden **53** bzw. **54**, angebrachten Elektroden beträgt etwa 50 µm. Die voneinander getrennten Elektroden sind individuell, gleichzeitig oder zeitlich gestaffelt elektrisch ansteuerbar. Durch geeignete, individuelle Elektrodenvorspannungen ist eine optische Phasenschiebung, die als "optische Vorspannung" aufgefaßt werden kann, einstellbar. Wegen der nichtlinearen Phasenverschiebung als Funktion der angelegten Spannung, läßt sich so ein genaueres ganzzahliges Verhältnis der optischen Phasenschiebung für die TE- und TM-Wellen erreichen. Dadurch kann die Polarisationsunabhängigkeit oder die Polarisationstrennung, wie experimentell ermittelt wurde, genauer eingestellt werden.

Die individuelle, zeitlich gestaffelte Ansteuerbarkeit der Elektroden erlaubt eine "Quasi- Anpassung" der elektronischen und der optischen Laufzeit. Dadurch ergibt sich eine wesentliche Verbesserung der Modulationsbandbreite oder der Schaltgeschwindigkeit. Durch Erhöhung der Zahl der in Serie angesteuerten Halbleiterbauelemente bei gleichzeitiger Verkürzung der Elektrodenlänge **l₁** (siehe **Figur 1**) läßt sich eine weitere Modulationsbandbreite- oder Schaltgeschwindigkeitserhöhung erreichen.

## Patentansprüche

1. Integrierte optische Schaltung **(1, 33, 45)**, mit wenigstens einem einen Wellenleiterteil **(11, 57, 58)** zur Führung von TE- und TM-Wellen aufweisenden, mit Elektroden **(5, 13, 53, 54)** versehenen Schaltungselement **(1, 51, 52)** mittels dem durch Anlegen einer Spannung zwischen den Elektroden **(5, 13, 53, 54)** die Phasengeschwindigkeit der Wellen im Wellenleiterteil **(11, 57, 58)** änderbar ist, **dadurch gekennzeichnet**, daß das Schaltungselement ein Halbleiterbauelement **(1, 51, 52)** mit lediglich zwei Elektroden **(5, 13, 53, 54)** ist, dessen freie Ladungsträgerdichte und dessen den elektrischen Feldlinienverlauf **(22)** im Wellenleiterteil **(11, 57, 58)** zwischen den Elektroden **(5, 13, 53, 54)** bestimmende Elektrodenabmessungen **(b₁)** im Verhältnis zur Wellenleiterkonfiguration **(w)** so bemessen sind, daß bei Anlegen einer bestimmten Spannung zwischen den Elektroden im Wellenleiterteil eine Verkrümmung der elektrischen Feldlinien derart auftritt, daß die Phasen der TE- und der TM-Welle um ein ganzzahliges Vielfaches der halben Wellenlänge gegeneinander verschiebbar sind.

2. Integrierte optische Schaltung **(1, 33, 45)** nach Anspruch 1, **dadurch gekennzeichnet**, daß die erste Elektrode **(5)** auf der dem Wellenleiterteil **(11, 57, 58)** abgewandten Seite des Halbleiterbauelements **(1, 51, 52)** und die zweite Elektrode auf dem Wellenleiterteil **(11, 57, 58)** liegt.

3. Integrierte optische Schaltung **(1, 33, 45)** nach Anspruch 1 oder 2, **dadurch gekennzeichnet**, daß das Halbleiterbauelement **(1, 51, 52)** ein Kristall ist, und der Wellenleiterteil **(11, 57, 58)** in einer Kristallebene, die zwei optische Hauptachsen des Kristalls enthält, liegt.

4. Integrierte optische Schaltung **(1, 33, 45)** nach einem der Ansprüche 1 bis 3, **dadurch gekennzeichnet**, daß das Halbleiterbauelement **(1, 51, 52)** in einen der beiden Wellenleiterzweige **(30/31, 47/48)** eines wenigstens einen Teil der Schaltung **(1)** bildenden Mach-Zehnder-Interferometers **(33, 45)** oder Richtkopplers integriert ist.

5. Integrierte optische Schaltung **(1, 33, 45)** nach den Ansprüchen 2 und 4, **dadurch gekennzeichnet**, daß die Dotierung des Halbleiterbauelements **(1, 51, 52)** und die den elektrischen Feldlinienverlauf **(22)** im Wellenleiterteil **(11, 57, 58)** bestimmende Elektrodenabmessung **(b₁)** der zweiten Elektrode **(13, 53, 54)** im Verhältnis zur Breite **(w)** des Wellenleiterteils **(11, 57, 58)** so bemessen ist, daß die Phase der in einem der Wellenleiterzweige **(30, 47 bzw. 48)** des Mach-Zehnder-Interferometers **(33, 45)** oder des Richtkopplers sich ausbreitenden TE-Welle und diejenige der TM-Welle durch das Halbleiterbauelement **(1, 51 bzw. 52)** bei ein- und derselben Spannung um ein ganzzahliges ungerades Vielfaches der halben Wellenlänge gegenüber der Phase der TE-Welle und derjenigen der TM-Welle in dem anderen Wellenleiterzweig **(31, 48 bzw. 47)** verschiebbar ist, damit das Mach-Zehnder-Interferometer **(33, 45)** oder der Richtkoppler als von der Polarisation der zu schaltenden Welle unabhängig schaltender Schalter wirkt.

6. Integrierte optische Schaltung **(1, 33, 45)** nach Anspruch 4 oder 5, **gekennzeichnet durch** ein zweites, in den anderen der beiden Wellenleiterzweige **(47, 48)** des Mach-Zehnder-Interferometers **(45)** integriertes Halbleiterbauelement **(52)**, um einerseits durch Kurzschließen der Elektroden **(5, 54)** des zweiten Halbleiterbauelements **(52)** den anderen Wellenleiterzweig **(48)** vom elektrischen Feld des ersten Halbleiterbauelements **(51)** abzuschirmen, oder andererseits um durch Anlegen einer Vorspannung an die Elektroden **(5, 53, 54)** beider Halbleiterbauelemente **(51, 51)** die Schaltspannungen an beiden Elektroden **(5, 53, 54)** zu verringern.

7. Integrierte optische Schaltung **(1, 33, 45)** nach Anspruch 2, **dadurch gekennzeichnet**, daß der Wellenleiterteil des Halbleiterbauelements **(1, 51, 52)** als Rippenwellenleiter **(11, 57, 58)** mit einem in Wellenausbreitungsrichtung verlaufenden, beidseits sich stufenförmig über den übrigen Teil des Halbleiterbauelements **(1, 51)** erhebenden rippenartigen Vorsprung ausgebildet ist, in der Nähe dessen Deckfläche eine p - n Barriere oder eine Schottky - Barriere liegt, die Deckfläche mit einer elektrisch leitenden Elektrode bedeckt ist, deren Breite annähernd gleich der Breite der Barriere und die kleiner als die dreifache Rippenbreite **(w)** und so groß ist, daß die Phasenverschiebung für die TE- und die TM-Welle genau eingestellt ist.

8. Integrierte optische Schaltung **(1, 33, 45)** nach Anspruch 2, **dadurch gekennzeichnet**, daß das Halbleiterbauelement **(1, 51, 52)** eine aus Verbindungen der chemischen Gruppen III und V oder II und VI bestehende Schichtstruktur **(2)** mit z. B. einem aus GaAs oder InP bestehenden Substrat **(3)**, auf dessen Grundfläche die erste, z. B. aus einer AuGe/Ni/Au-Legierung bestehende Elektrode **(5)** liegt, und dessen andere Seite mit einer dotierten, z. B. aus Ga₁₋ₓAlₓAs oder Ga₁₋ₓInₓAs_{1-y}P_{y} bestehenden ersten Schicht **(7)** bedeckt ist, über der eine zweite, z. B. aus Ga_{1-x′}Al_{x′}As oder aus Ga_{1-x′}In_{x′}As_{1-y}P_{y} bestehende, Schicht **(9)** liegt, wobei x′ < x ist, in der der größte Teil der optischen Feldenergie der geführten Welle fließt, und daß die freie Ladungsträgerdichte der zweiten Schicht **(7)** kleiner als diejenige der ersten Schicht **(3)** ist.

9. Integrierte optische Schaltung **(1, 33, 45)** nach den Ansprüchen 5, 6 und 7, **dadurch gekennzeichnet**, daß das Mach-Zehnder-Interferometer **(33, 45)** als ein Halbleiterbauteil mit gleicher Schichtstruktur wie das Halbleiterbauelement **(1, 51, 52)** aufgebaut ist, zwei Eingangs- **(59, 60)** und zwei Ausgangswellenleiter **(63, 64)** und zwei 3-dB-Koppler **(55, 56)** hat, deren jeder einen ersten Abschnitt, in dem die beiden Wellenleiter **(59/60, 63/64)** bis auf etwa Wellenleiterbreite konvergieren, einen anschließenden zweiten Abschnitt, in dem sie über eine von der Wellenlänge der geführten Welle abhängige Koppellänge annähernd parallel zueinander verlaufen und durch je eine dritte Elektrode **(67, 68, 69, 70)** bedeckt sind, wobei die Breite **(b**_{**k**}**)** der dritten Elektroden **(67, 68, 69, 70)** größer als die Breite der bedeckten Rippenbreite **(w)** des Wellenleiterteils **(11, 57, 58)** und die Höhe des rippenartigen Vorsprungs kleiner als ein Viertel der Wellenlänge der im Wellenleiterteil **(11, 57, 58)** führbaren Welle ist, und einen nachfolgenden dritten Abschnitt hat, in dem die beiden Wellenleiter **(47, 48)** divergieren, und daß zwischen den beiden Kopplern **(55, 56)** das erste Halbleiterbauelement **(51)** in den einen **(47)** und das zweite **(52)** in den anderen **(48)** der beiden Wellenleiterzweige integriert ist.

10. Integrierte optische Schaltung **(1, 33, 45)** nach einem der Ansprüche 1 bis 9, **dadurch gekennzeichnet**, daß die den elektrischen Feldlinienverlauf **(22)** in dem Halbleiterelement **(1, 51, 52)** bestimmende Elektrode **(13, 53, 54)** durch eine Zuleitung **(17)** mit einem Anschlußfeld **(19)** verbunden ist, wobei das Anschlußfeld **(19)** vollständig und die Zuleitung **(17)** fast vollständig bis auf den unmittelbaren Anschluß an die Elektrode **(13)** mit einer isolierenden Schicht **(20)**, z. B. einer Siliziumdioxydschicht, unterlegt sind.

11. Integrierte optische Schaltung **(1, 33, 45)** nach einem der Ansprüche 1 bis 10, mit mehreren, je einen Wellenleiterteil **(11, 57, 58)** zur Führung von TE- und TM-Wellen aufweisenden und mit je zwei Elektroden **(5, 13, 53, 54)** versehenen Schaltungselementen, **dadurch gekennzeichnet**, daß die Wellenleiterteile **(11, 57, 58)** der die Schaltungselemente bildenden Halbleiterbauelemente **(1, 51, 52)** voneinander distanzierte Teile eines oder mehrerer Wellenleiter bilden, wobei jeweils eine der Elektroden **(5, 13, 53, 54)** jedes Halbleiterbauelements **(1, 51, 52)** individuell, gleichzeitig mit oder zeitlich gestaffelt zu der bzw. den anderen Elektroden **(5, 13, 53, 54)** des bzw. der anderen Halbleiterbauelemente **(1, 51, 52)** elektrisch ansteuerbar ist.

12. Verfahren zum Betrieb der integrierten optischen Schaltung nach Anspruch 9 als Schalter, **dadurch gekennzeichnet**, daß zum Sperren der TE- und TM-Welle zwischen die Elektroden **(5, 13, 53, 54)** des phasenverschiebenden Halbleiterbauelements **(1, 51, 52)** eine Spannung von unter fünfundzwanzig Volt und zwischen die Elektroden **(5, 67, 68, 69, 70)** des 3-dB-Kopplers **(55, 56)** eine Spannung unter fünfundzwanzig Volt angelegt wird.

## Claims

1. Integrated optical circuit (1, 33, 45) having at least one switching element (1, 51, 52) which comprises a wave guide part (11, 57, 58) for guiding TE and TM waves, which is provided with electrodes (5, 13, 53, 54) and by means of which the phase velocity of the waves in the wave guide part (11, 57, 58) can be changed by application of a voltage between the electrodes (5, 13, 53, 54), characterised in that the switching element is a semiconductor element (1, 51, 52) which has only two electrodes (5, 13, 53, 54) and of which the free charge carrier density and of which the electrode dimensions (b₁) determining the path of the electric lines of flux (22) in the wave guide part (11, 57, 58) between the electrodes (5, 13, 53, 54) are dimensioned in comparison with the wave guide configuration (w) in such a way that, when a given voltage is applied between the electrodes in the wave guide part, the lines of electric flux are distorted in such a way that the phases of the TE and TM waves can be displaced relative to one another by an integral multiple of the half wave length.

2. Integrated optical circuit (1, 33, 45) according to Claim 1, characterised in that the first electrode (5) is on the side of the semiconductor element (1, 51, 52) which is remote from the wave guide part (11, 57, 58) and the second electrode is on the wave guide part (11, 57, 58).

3. Integrated optical circuit (1, 33, 45) according to either of Claims 1 and 2, characterised in that the semiconductor element (1, 51, 52) is a crystal, and the wave guide part (11, 57, 58) lies in a crystal plane which contains two optical principal axes of the crystal.

4. Integrated optical circuit (1, 33, 45) according to any one of Claims 1 to 3, characterised in that the semiconductor element (1, 51, 52) is integrated in one of the two wave guide branches (30/31, 47/48) of a directional coupler or Mach-Zehnder interferometer (33, 45) forming at least part of the circuit (1).

5. Integrated optical circuit (1, 33, 45) according to either of Claims 2 and 4, characterised in that the doping of the semiconductor element (1, 51, 52) and the dimensions (b₁) of the second electrode (13, 53, 54) determining the path of the lines of electric flux (22) in the wave guide part (11, 57, 58) is dimensioned in comparison with the width (w) of the wave guide part (11, 57, 58) in such a way that the phase of the TE wave propagating in one of the wave guide branches (30, 47 or 48) of the Mach-Zehnder interferometer (33, 45) or of the directional coupler and that of the TM wave can be displaced by the semiconductor element (1, 51 or 52) if the voltage is the same by an integral, odd multiple of the half wave length with respect to the phase of the TE wave and that of the TM wave in the other wave guide branch (31, 48 or 47), such that the Mach-Zehnder interferometer (33, 45) or the directional coupler acts as a switch switching independently of the polarisation of the wave to be switched.

6. Integrated optical circuit (1, 33, 45) according to either of Claims 4 and 5, characterised by a second semiconductor element (52) which is integrated in the second of the two wave guide branches (47, 48) of the Mach-Zehnder interferometer (45) in order, firstly, to screen the second wave guide branch (48) from the electric field of the first semiconductor element (51) by short-circuiting the electrodes (5, 54) of the second semiconductor element (52) or, secondly, in order to reduce the switching voltages at both electrodes (5, 53, 54) by applying a bias voltage to the electrodes (5, 53, 54) of both semiconductor elements (51, 51).

7. Integrated optical circuit (1, 33, 45) according to Claim 2, characterised in that the wave guide part of the semiconductor element (1, 51, 52) is in the form of a ribbed wave guide (11, 57, 58) having a rib-like projection which extends in the direction in which the waves propagate, which rises on both sides in a stepped manner over the remaining part of the semiconductor element (1, 51), and in the vicinity of the covering surface of which a p-n barrier or a Schottky barrier is located, the cover surface being covered with an electrically conductive electrode of which the width is approximately equal to the width of the barrier and which is smaller than three times the width of the ribs (w) and is of such a size that the phase displacement for the TE and TM waves is set precisely.

8. Integrated optical circuit (1, 33, 45) according to Claim 2, characterised in that the semiconductor element (1, 51, 52) is a layered structure (2) which consists of compounds of the chemical groups III and V or II and VI with, for example, a substrate (3) which consists of GaAs or InP and on the base surface of which the first electrode (5), for example consisting of an AuGe/Ni/Au alloy, is located, and of which the other side is covered with a doped first layer (7), for example of Ga₁₋ₓAlₓAs or Ga₁₋ₓInₓAs_{1-y}P_{y}, above which there is a second layer (9) consisting, for example, of Ga_{1-x'}Al_{x'}As or of Ga₁₋ _{x'}In_{x'}As_{1-y}P_{y}, wherein x' < x, in which the majority of the optical field energy flows to the guided wave; and in that the free charge carrier density of the second layer (7) is smaller than that of the first layer (3).

9. Integrated optical circuit (1, 33, 45) according to any one of Claims 5, 6 and 7, characterised in that the Mach-Zehnder interferometer (33, 45) is constructed as a semiconductor element part having the same layered structure as the semiconductor element (1, 51, 52), has two inlet (59, 60) and two output wave guides (63, 64), and two 3-dB couplers (55, 56), each of which has a first section, in which the two wave guides (59/60, 63/64) converge approximately as far as the width of the wave guide, an adjoining second section in which they extend approximately parallel to one another over a coupling length dependent on the wavelength of the guided wave, and are covered in each case by a third electrode (67, 68, 69, 70), the width (bₖ) of each third electrode (67, 68, 69, 70) being greater than the width of the covered rib width (w) of the wave guide part (11, 57, 58) and the height of the rib-like projection being less than a quarter of the wavelength of the wave which can be guided in the wave guide part (11, 57, 58), and has a subsequent third section in which the two wave guides (47, 48) diverge; and in that, between the two couplers (55, 56), the first semiconductor element (51) is integrated in the one (47) and the second (52) is integrated in the other (48) of the two wave guide branches.

10. Integrated optical circuit (1, 33, 45) according to any one of Claims 1 to 9, characterised in that the electrode (13, 53, 54) determining the path of the electric lines of flux (22) in the semiconductor element (1, 51, 52) is connected by a feed line (17) to a connection field (19), the connection field (19) being completely below an insulating layer (20), for example a silicon dioxide layer, and the feed line (17) being completely below said insulating layer (20), apart from the direct connection to the electrode (13).

11. Integrated optical circuit (1, 33, 45) according to any one of Claims 1 to 10, having a plurality of switching elements which each comprise a wave guide part (11, 57, 58) for guiding TE and TM waves and of which each is provided with two electrodes (5, 13, 53, 54), characterised in that the wave guide parts (11, 57, 58) of the semiconductor elements (1, 51, 52) forming the switching elements form parts of one or more wave guides which are at a spacing from one another, it being possible to trigger electrically one of the electrodes (5, 13, 53, 54) of each semiconductor element (1, 51, 52) in each case individually, simultaneously with or chronologically staggered with respect to the other electrode or electrodes (5, 13, 53, 54) of the other semiconductor element or elements (1, 51, 52).

12. Method of operating an integrated optical circuit according to Claim 9 as a switch, characterised in that a voltage of less than 25 volts is applied between the electrodes (5, 13, 53, 54) of the phase-shifting semiconductor element (1, 51, 52) and a voltage of less than 25 volts is applied between the electrodes (5, 67, 68, 69, 70) of the 3-dB coupler (55, 56) in order to lock the TE and TM waves.

## Revendications

1. Circuit optique intégré (1, 33, 45) avec au moins un élément de circuit (1, 51, 52) comportant une partie de guide d'ondes (11, 57, 58) pour le guidage des ondes TE et TM, muni des électrodes (5, 13, 53, 54), élément de circuit avec lequel, par application d'une tension entre les électrodes (5, 13, 53, 54), on peut faire varier la vitesse de phase des ondes dans la partie guide d'ondes (11, 57, 58), caractérisé en ce que l'élément de circuit est un module à semi-conducteurs (1, 51, 52) avec uniquement deux électrodes (5, 13, 53, 54), dont la densité porteuse de charge libre et les dimensions d'électrode (b₁) déterminant le tracé des lignes de champ électrique (22) dans la partie de guide d'ondes (11, 57, 58) entre les électrodes (5, 13, 53, 54) sont sélectionnées de telle sorte que par rapport à la configuration du guide d'ondes (w) lors de l'application d'une tension déterminée entre les électrodes dans la partie de guide d'ondes, il se produit une déformation ou torsion des lignes de champ électrique décalant les phases des ondes TE et TM d'un multiple à nombre entier de la demi-longueur d'onde l'une par rapport à l'autre.

2. Circuit optique intégré (1, 33, 45) selon la revendication 1, caractérisé en ce que la première électrode (5) repose sur le côté détourné de la partie de guide d'ondes (11, 57, 58) du module à semi-conducteurs (1, 51, 52) et en ce que la deuxième électrode repose sur la partie de guide d'ondes (11, 57, 58).

3. Circuit optique intégré (1, 33, 45) selon la revendication 1 ou 2, caractérisé en ce que le module à semi-conducteurs (1, 51, 52) est un cristal et la partie de guide d'ondes (11, 57, 58) est située dans un plan cristallin qui contient les deux axes principaux optiques du cristal.

4. Circuit optique intégré (1, 33, 45) selon l'une des revendications 1 à 3, caractérisé en ce que le module à semi-conducteurs (1, 51, 52) est intégré dans l'une des deux branches de guide d'ondes (30, 31, 47, 48) d'un interféromètre Mach-Zehnder (33, 45) formant au moins une partie du circuit (1) ou d'un coupleur directif.

5. Circuit optique intégré (1, 33, 45) selon les revendications 2 et 4, caractérisé en ce que le dopage du composant à semi-conducteurs (1, 51, 52) et la dimension d'électrode déterminant le tracé des lignes de champ électrique (22) dans la partie de guide d'ondes (11, 57, 58), dimension d'électrode (B₁) de la deuxième électrode (13, 53, 54) sont sélectionnés par rapport à la largeur (w) de la partie de guide d'ondes (11, 57, 58) de manière à décaler la phase de l'onde TE s'élargissant dans l'une des branches de guide d'ondes (30, 47 ou 48) de l'interféromètre Mach-Zehnder (33, 45) ou du coupleur directif et la phase de l'onde TM par le module à semi-conducteurs (1, 51 ou 52) lors d'une seule et même tension d'un multiple impair de nombre entier de la demi-longueur d'onde par rapport à la phase de l'onde TE et à la phase de l'onde TM dans l'autre branche de guide d'ondes (31, 48 ou 47), afin de faire fonctionner l'interféromètre Mach-Zehnder (33, 45) ou le coupleur directif comme commutateur agissant selon la polarisation de l'onde à commuter.

6. Circuit optique intégré (1, 33, 45) selon la revendication 4 ou 5, caractérisé par un deuxième module à semi-conducteurs (52) intégré dans l'autre des deux branches de guide d'ondes (47, 48) de l'interféromètre Mach-Zehnder (45), d'une part, pour protéger, par court-circuit des électrodes (5, 54) du deuxième module à semi-conducteurs (52), l'autre branche de guide d'ondes (48) du champ électrique du premier module à semi-conducteurs (51) ou d'autre part, pour réduire, par application d'une tension préalable sur les électrodes (5, 53, 54) des deux modules à semi-conducteurs (51, 52), les tensions de circuit sur les deux électrodes (5, 53, 54).

7. Circuit optique intégré (1, 33, 45) selon la revendication 2, catactérisé, en ce que la partie de guide d'ondes du module à semi-conducteurs (1, 51, 52) est constituée d'une saillie en forme de nervure relevée s'étendant dans la direction d'expansion des ondes, des deux côtés en forme de gradins sur la partie restante du composant à semi-conduteurs (1, 51) à proximité de la phase de recouvrement de laquelle repose une barrière p - n ou une barrière Schottky, la phase de recouvrement étant revêtue d'une électrode conductrice électriquement dont la largeur est approximativement égale à la largeur des barrières et inférieure à la largeur de nervures triples (w) et d'une grandeur telle permettant d'ajuster le décalage de phase avec précision pour l'onde TE et l'onde TM.

8. Circuit optique intégré (1, 33, 45) selon la revendication 2, caractérisé en ce que le composant à semi-conducteurs (1, 51, 52) consiste en une structure de couche (2) constituée par des composés des groupes chimiques III et V ou II et VI avec par exemple un substrat constitué par GaAs ou InP (3) sur la surface de base duquel repose la première électrode (5) constituée par exemple d'un alliage. AuGe/Ni/Au, et dont l'autre côté est recouvert d'une première couche (7) dopée, par exemple en Ga₁₋ₓAlₓAs ou Ga₁₋ ₓInₓAs_{1-y}P_{y}, sur laquelle repose par exemple une deuxième couche (9) constituée par Ga_{1-x'}Al_{x'}As ou par Ga_{1-x'}In_{x'}As_{1-y}P_{y}, x' < x, dans laquelle s'écoule la plus grande partie de l'énergie de champ optique de l'onde menée et en ce que la densité porteuse de charge libre de la deuxième couche (7) est inférieure à celle de la première couche (3).

9. Circuit optique intégré (1, 33, 45) selon les revendications 5, 6 et 7, caractérisé en ce que l'interféromètre Mach-Zehnder (33, 45) est conçu comme module à semi-conducteurs avec une structure de couche identique au module à semi-conducteurs (1, 51, 52), deux guides d'ondes d'entrée (59, 60) et deux guides d'ondes de sortie (63, 64) et deux coupleurs 3-dB (55, 56) étant prévus, chacun présentant une première section dans laquelle les deux guides d'ondes (59, 60, 63, 64) convergent jusque sensiblement la largeur des guides d'ondes, une deuxième section contiguë laquelle ils s'étendent sur une longueur de couplage dépendante de la longueur d'onde de l'onde menée sensiblement parallèlement entre eux et sont recouverts respectivement par une troisième électrode (67, 68, 69, 70), la largeur (bₖ) de la troisième électrode (67, 68, 69,70) étant supérieure à la largeur de la nervure revêtue (w) de la partie de guide d'ondes (11, 57, 58) et la hauteur de la saillie en nervures étant inférieure à 1/4 de la longueur d'ondes de l'onde guidée dans la partie de guide d'ondes (11, 57, 58), et comporte une troisième section consécutive dans laquelle divergent les deux guides d'ondes (47, 48) et en ce qu'entre les deux coupleurs (57, 56) le premier module à semi-conducteurs (51) est intégré dans une branche (47) et le deuxième (52) dans l'autre branche (48) des deux branches de guide d'ondes.

10. Circuit optique intégré (1, 33, 45) selon l'une des revendications 1 à 9, caractérisé en ce que l'électrode (13, 53, 54) déterminant la configuration de ligne de champ électrique (22) dans l'élément à semi-conducteurs (1, 51, 52) est reliée à un conduit d'amenée (17) avec un champ de raccordement (19), le champ de raccordement (19) étant intégral et le conduit d'amenée (17) étant pratiquement intégral jusqu'au raccordement direct sur l'électrode (13) avec une couche isolante (20), par exemple une couche au dioxyde de silicium.

11. Circuit optique intégré (1, 33, 45) selon l'une des revendications 1 à 10, avec plusieurs éléments de circuit munis respectivement d'une partie guide d'ondes (11, 57, 58) pour le guidage des ondes TE et TM avec respectivement deux électrodes (5, 13, 53, 54), caractérisé en ce que les parties de guide d'ondes (11, 57, 58) des modules à semi-conducteurs (1, 51, 52) formant les éléments de circuit forment des parties espacées entre elles d'un ou de plusieurs guides d'ondes, respectivement une des électrodes (5, 13 53, 54) de chaque composant à semi-conducteurs (1, 51, 52) pouvant étre commandé simultanément échelonnés dans le temps par rapport à une ou l'autre électrode (5, 13, 53, 54) du ou des autres module(s) à semi-conducteure (1, 51, 52).

12. Procédé pour le fonctionnement ou l'exploitation du circuit optique intégré selon la revendication 9 en tant que commutateur, caractérisé en ce que pour le blocage de l'onde TE et de l'onde TM entre les électrodes (5, 13, 53, 54) du module à semi-conducteurs à décalage de phase (1, 51, 52), il est appliqué une tension inférieure à 25 volts et entre les électrodes (5, 67, 68, 69, 70) du coupleur 3-dB (55, 56), il est appliqué une tension inférieure à 25 Volts.
